# EUROPÄISCHE PATENTANMELDUNG

(11) **EP 3 023 191 A1**
(43) Veröffentlichungstag der Anmeldung: **25.05.2016**
(21) Anmeldenummer: 14193997.5
(22) Anmeldetag: 20.11.2014
(51) Int. Cl.: B23P 15/04, F01D 5/14, F01D 5/18

(54) **TURBINENSCHAUFEL HERGESTELLT AUS ZWEI TEILEN**

(71) Anmelder: Siemens Aktiengesellschaft, 80333 München (DE)
(72) Erfinder: Anton, Reiner, 14193 Berlin (DE); Herfurth, Robert, 13189 Berlin (DE); Krabiell, Kay, 16562 Hohen Neuendorf (DE); Maiz, Khaled, 13355 Berlin (DE); Münzer, Jan, 10439 Berlin (DE); Reinkensmeier, Ingo, 58730 Fröndenberg (DE); Schmidt, Olaf, 12349 Berlin (DE); Schulz, Frank, 12621 Berlin (DE)

(57) **Zusammenfassung**

Eine Turbinenschaufel (120, 130) für eine Gasturbine (100) mit einem Befestigungsbereich (160) und einem sich daran anschließenden Plattformbereich (158), der eine Plattform (162) umfasst, an der ein im Querschnitt profiliertes Schaufelblatt mit einer Druckseitenwand (148) und einer Saugseitenwand (150) angeordnet ist, soll einen besonders hohen Wirkungsgrad der Gasturbine bei besonders langer Lebensdauer ermöglichen. Dazu besteht die Turbinenschaufel (120, 130) aus zwei miteinander verbundenen Teilen, wobei der erste Teil die Druckseitenwand (148) und der zweite Teil die Saugseitenwand (150) umfasst.

## Beschreibung

Die Erfindung betrifft eine Turbinenschaufel für eine Gasturbine mit einem Befestigungsbereich und einem sich daran anschließenden Plattformbereich, der eine Plattform umfasst, an der ein im Querschnitt profiliertes Schaufelblatt mit einer Druckseitenwand und einer Saugseitenwand angeordnet ist. Sie betrifft weiter ein Verfahren zur Herstellung einer derartigen Turbinenschaufel.

Turbinenschaufeln der oben genannten Art dienen in Gasturbinen zur Umwandlung der Energie eines heißen Gasstroms in rotatorische Energie. Sie weisen typischerweise ein von Hohlräumen zur Führung von Kühlluft durchzogenes Schaufelblatt auf, wobei die Hohlräume sich kanalartig entlang der Längsrichtung, d. h. von der Plattform bis zur Schaufelspitze erstrecken und durch Rippen voneinander getrennt sind. Die Rippen erstrecken sich somit von der Druckseitenwand zur Saugseitenwand.

Turbinenschaufeln werden derzeit gusstechnisch aus einem Stück und einem Werkstoff hergestellt. Dies erfolgt in der Regel im Vakuumfeingussverfahren. Die oben beschriebenen Hohlräume in der Schaufel werden dabei mit einem entsprechend geformten Gusskern erzeugt. Im Zuge der weiteren Wirkungsgradverbesserung aktueller Gasturbinen insbesondere durch die Erhöhung des Massenstroms hat sich jedoch herausgestellt, dass die in diesem Verfahren hergestellten Turbinenschaufeln den aktuellen Erfordernissen an Stabilität und Lebensdauer unter Umständen nicht mehr genügen.

Es ist daher Aufgabe der Erfindung, eine Turbinenschaufel der eingangs genannten Art sowie ein Verfahren zur Herstellung einer derartigen Turbinenschaufel anzugeben, die einen besonders hohen Wirkungsgrad der Gasturbine bei besonders langer Lebensdauer ermöglichen.

Diese Aufgabe wird bezüglich der Turbinenschaufel erfindungsgemäß gelöst, indem die Turbinenschaufel aus zwei separat hergestellten, miteinander verbundenen Teilen besteht, wobei der erste Teil die Druckseitenwand und der zweite Teil die Saugseitenwand umfasst.

Bezüglich des Verfahrens wird die Aufgabe gelöst durch ein Verfahren mit den Verfahrensschritten:
- Gießen eines ersten Teils mit einer Druckseitenwand,
- Gießen eines zweiten Teils mit einer Saugseitenwand,
- Verbinden des ersten und des zweiten Teils.

Die Erfindung geht dabei von der Überlegung aus, dass bezüglich der Erhöhung des Massenstromes durch die Gasturbine die Auslegung insbesondere der vierten Turbinenlaufschaufelstufe an fertigungstechnische Grenzen stößt: Die Laufschaufel soll eine eingangs beschriebene Innenstruktur besitzen und aktiv gekühlt werden. Die Ermittlung und Auswertung kritischer Parameter und Kennzahlen aus Strömungsfläche und Drehzahl hat dabei insbesondere bei der vierten Turbinenlaufschaufelstufe gezeigt, dass deren Masse und Massenverteilung in einem derartigen Maße genau kontrolliert werden müssen, das vom bisher verwendeten Vakuumfeingussverfahren mit herkömmlicher Prozessführung nicht mehr gewährleistet werden kann. Die hohe Genauigkeit ist aber zwingend erforderlich, um die im Betrieb auftretenden Fliehkräfte zu begrenzen, so dass die Bauteile noch von der Schaufel getragen werden können.

Spezifisch wäre es erforderlich, die Bauteilwandstärke im oberen Bereich des Schaufelblattes auf etwa 1 mm in sehr engen Grenzen auszuführen. Beim bisherigen Verfahren führt aber insbesondere die Variation der Lage des Gusskerns beim Abguss hier zu starken Schwankungen der Bauteilwandstärke. Darüber hinaus ist eine Wandstärke von etwa 1 mm bei einem so großen Bauteil im Gussverfahren generell schwer umsetzbar. Daher sollte die Turbinenschaufel zweiteilig gegossen und erst anschließend verbunden werden, so dass jeder der Teile ohne Gusskern hergestellt werden kann. Da die Hohlräume zwischen Druckseitenwand und Saugseitenwand angeordnet sind, ist dies möglich, indem jeweils einer der beiden Teile die Druckseitenwand bzw. die Saugseitenwand umfasst. Hierdurch kann auf einen Gusskern verzichtet werden und die Turbinenschaufel lässt sich mit besonders geringen Toleranzen fertigen.

Bei Turbinenschaufeln, bei denen wie beschrieben zwischen Druckseitenwand und Saugseitenwand zur Bildung von Hohlräumen zur Kühlluftführung zumindest eine diese verbindende Rippe angeordnet ist, umfasst der zweite Teil vorteilhafterweise die Rippe oder die Rippen. Das heißt, dass die Rippen bezüglich des Gießverfahrens vorteilhafterweise gemeinsam mit der Saugseitenwand gegossen werden.

Der zweite Teil umfasst dabei vorteilhafterweise auch den Plattformbereich, d. h. der Plattformbereich wird bezüglich des Gießverfahrens vorteilhafterweise gemeinsam mit der Saugseitenwand gegossen. Grundsätzlich sind dabei aber auch andere Kombinationen möglich, wie z. B. das gemeinsame Gießen der Druckseitenwand mit Plattformbereich und/oder Rippen oder aber das gemeinsame Gießen von Rippen und Plattformbereich mit jeweils anderen Seitenwänden.

Weiter bevorzugt umfasst der zweite Teil neben dem Plattformbereich auch den Befestigungsbereich der Turbinenschaufel, welcher auch als Schaufelfuß bekannt ist. Dabei ist der Befestigungsbereich nicht wie das Schaufelblatt hälftig geteilt, sondern für sich genommen einstückig ausgebildet. Mithin wird der gesamte Befestigungsbereich bei Gießen zweiten Teils mit erstellt und ist somit monolithischer Bestandteil dessen.

Vorteilhafterweise sind der erste und der zweite Teil formschlüssig verbunden, d. h. bezüglich des Verfahrens erfolgt das Verbinden vorzugsweise mittels Formschluss. Eine formschlüssige Verbindung ist nämlich einerseits vergleichsweise stabil, andererseits besonders einfach hinsichtlich der Montage zu handhaben.

Insbesondere sind der erste und der zweite Teil vorzugsweise über eine Nut-Feder-Verbindung verbunden. Eine derartige formschlüssige Verbindung ist auch für die gebogen profilierten Druck- und Saugseitenwände gut realisierbar, da die Nut der Form folgend ausgebildet werden kann.

Hierbei ist es insbesondere von Vorteil, wenn die Nut in den Plattformbereich eingebracht ist und die Feder an der dem Plattformbereich zugewandten Seite der Druckseitenwand angeordnet ist. Hierdurch ergibt sich ein Formschluss am Übergang von Schaufelblatt und Plattform.

Hierbei sind Nut und Feder vorteilhafterweise im Querschnitt L-förmig ausgebildet. Dies sorgt für einen Formschluss in zwei Raumrichtungen, so dass die Feder nur noch aus einer Raumrichtung in die Nut geschoben werden kann und in die anderen Raumrichtungen fixiert ist.

In alternativer oder zusätzlicher vorteilhafter Ausgestaltung der Turbinenschaufel sind der erste und der zweite Teil stoffschlüssig verbunden, d. h. bezüglich des Verfahrens erfolgt das Verbinden vorzugsweise mittels Stoffschluss.

Insbesondere sind der erste und der zweite Teil vorzugsweise über eine Schweißverbindung, insbesondere eine Elektronenstrahlschweißverbindung verbunden, d. h. bezüglich des Verfahrens erfolgt das Verbinden vorzugsweise mittels Schweißen, insbesondere Elektronenstrahlschweißen. Das Elektronenstrahlschweißen erlaubt hohe Schweißgeschwindigkeiten mit extrem tiefen, schmalen und parallelen Nähten. Durch die geringen Nahtbreiten und die hohe Parallelität kann der Verzug extrem klein gehalten werden. Zudem eignet es sich besonders zum Verschweißen der höchstschmelzenden Stähle, die für Turbinenschaufeln verwendet werden.

Ein Stator oder Rotor für eine Gasturbine umfasst vorteilhafterweise eine beschriebene Turbinenschaufel und/oder eine mit dem beschriebenen Verfahren hergestellte Turbinenschaufel. Dabei ist eine derartige Turbinenschaufel insbesondere eine Laufschaufel. Auch wenn derartige modular aufgebaute Turbinenschaufeln sowohl als Leit- als auch als Laufschaufeln in jeder Turbinenstufe verwendet werden können, treten die eingangs dargestellten Probleme bzgl. Fliehkräften natürlich nur bei Laufschaufeln, insbesondere (bei stationären Gasturbinen) bei der vierten Laufschaufelreihe auf. Für Laufschaufeln sind die dargestellten Ausgestaltungsmöglichkeiten daher von ganz besonderem Vorteil.

Eine Gasturbine umfasst vorteilhafterweise einen derartigen Stator oder Rotor.

Die mit der Erfindung erzielten Vorteile bestehen insbesondere darin, dass durch die zweiteilige, modulare Herstellung einer Turbinenschaufel, bei der das Schaufelblatt zweigeteilt hergestellt wird, ein Gusskern entfallen kann und dadurch wesentlich geringere Toleranzen hinsichtlich der Wandstärken möglich werden. Es können maßgenaue Wandstärken hergestellt werden und eine aufwändige Nachbearbeitung der Turbinenschaufel kann entfallen, um die gewünschten Wandstärken zu erreichen. Mit diesem Verfahren werden die einzelnen Bauteilmodule nur über eine Wachsform dargestellt, so dass die Kernherstellung entfallen kann (Kosten geringer) und kein Einfluss auf Wandstärken durch Kernversatz entsteht.

Druck- und saugseitiges Schaufelblatt werden separat voneinander hergestellt, wobei an einer Seite der Fuß mitgegossen wird. Um eine sichere Verbindung der beiden Komponenten zu erreichen, kann sowohl ein Form- als auch ein Stoffschluss mittels Elektronenstahlschweißen vorgesehen sein.

Dies bietet zudem die Möglichkeit, die einzelnen Komponenten aus unterschiedlichen Werkstoffen herzustellen. In Abhängigkeit von der Belastung kann es nämlich sinnvoll sein, verschiedene Werkstoffe zu benutzen. Auch kann jeder der beiden Teile mehrteilig aus unterschiedlichen Werkstoffen aufgebaut sein.

Ein Ausführungsbeispiel der Erfindung wird anhand einer Zeichnung näher erläutert. Darin zeigen:
FIG 1 einen teilweisen Längsschnitt durch eine Gasturbine,
FIG 2 das Profil einer Laufschaufel, und
FIG 3 eine Vorderansicht der Laufschaufel.

Gleiche Teile sind in allen Figuren mit denselben Bezugszeichen versehen.

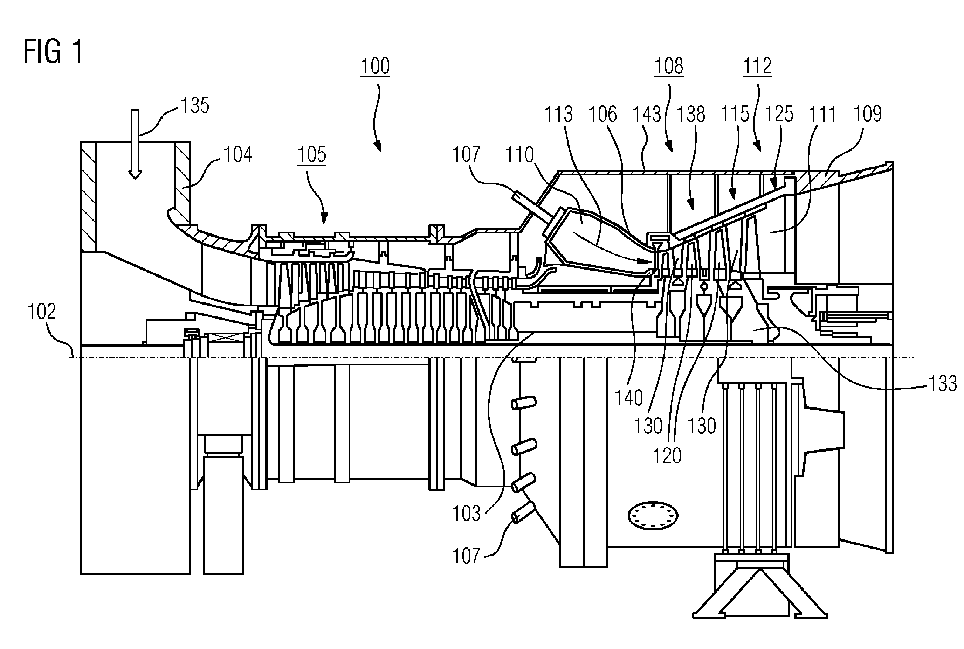

Die FIG 1 zeigt eine Turbine 100, hier eine Gasturbine, in einem Längsteilschnitt. Eine Turbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y2O4-ZrO2) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

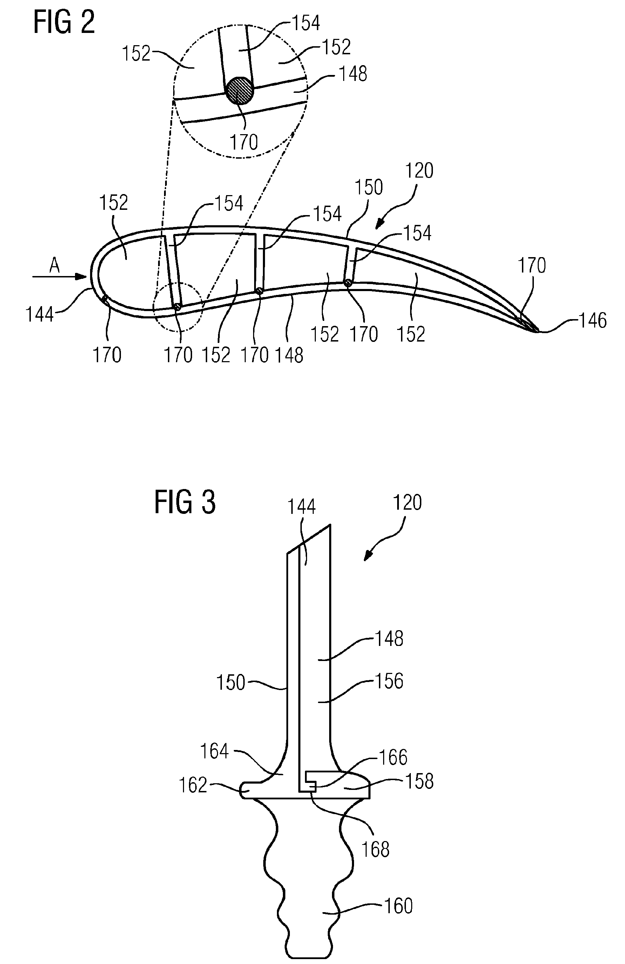

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel 120 einen derartigen Laufschaufelfuß auf, wie in der folgenden FIG 3 noch dargestellt wird, endet jedoch in einer Laufschaufelspitze.

In FIG 2 ist beispielhaft das Profil einer Laufschaufel 120 gezeigt. Das Profil ähnelt dem einer Flugzeugtragfläche. Es weist eine abgerundete Profilnase 144 und eine Profilhinterkante 146 auf. Zwischen Profilnase 144 und Profilhinterkante 146 erstrecken sich die konkave Druckseitenwand 148 und die konvexe Saugseitenwand 150 der Laufschaufel 120. Zwischen Druckseitenwand 148 und Saugseitenwand 150 sind mehrere Kühlluftkanäle 152 eingebracht, die sich entlang der in die FIG 2 hineinführenden Längsrichtung der Laufschaufel 120 erstrecken und durch Rippen 154 voneinander abgegrenzt sind. Mit anderen Worten: Die Rippen 154 unterteilen den Hohlraum zwischen Druckseitenwand 148 und Saugseitenwand 150 in Kühlluftkanäle 152.

FIG 3 zeigt die Laufschaufel 120 in einer Vorderansicht aus der in FIG 2 gezeigten Richtung A, d. h. aus Sicht der Profilnase 144. Gezeigt sind die Druckseitenwand 148 und die Saugseitenwand 150 im Schaufelblattbereich 156. An den Schaufelbereich 156 schließen sich der Plattformbereich 158 und der Befestigungsbereich 160 an. Im Plattformbereich 158 ist die bereits angesprochene, quer ausgerichtete Plattform 162 angeordnet, die zur Abdichtung des Rotors 103 gegen das Heißgas dient. Diese ist über eine hohlkehlartige Verrundung 164 mit dem Schaufelblattbereich 156 verbunden. Unterhalb der Plattform 162 sind im Befestigungsbereich 160 Profilierungen angeordnet, mittels derer die Laufschaufel 120 am Rotor 103 in einer tannenbaumartigen Nut-Feder-Verbindung fixiert wird.

Die Laufschaufel 120 mit den Kühlkanälen 152 ist ohne Nutzung eines Gusskerns hergestellt. Stattdessen ist die Laufschaufel 120 zweiteilig hergestellt. Der erste Teil umfasst lediglich die Druckseitenwand 148. Der zweite Teil umfasst Saugseitenwand 150, die Rippen 154, die Profilnase 144 sowie den gesamten Plattformbereich 158 und den Befestigungsbereich 160. Beide Teile enthalten somit keine Hohlräume und sind mit einer einfachen Form gegossen werden.

Die Verbindung beider Teile zur Zusammenfügung der Laufschaufel 120 erfolgt sowohl stoff- als auch formschlüssig. Die Druckseitenwand 158 umfasst dazu an ihrer dem Plattformbereich 158 zugewandten Seite eine L-förmige Feder 166, die der gebogenen Form der Druckseitenwand 158 entlang ihrer Erstreckungsrichtung folgt. Diese ist in eine entsprechend angeformte, L-förmige Nut 168 in der Plattform 162 eingeschoben.

Zusätzlich sind die beiden Teile an ihren Kontaktflächen mittels Elektronenstrahlschweißen verschweißt. Die Kontaktflächen sind mit ihren Schweißnähten 170 in FIG 2 dargestellt. Diese befinden sich an den Kontaktflächen zwischen Rippen 154 und Druckseitenwand 148 sowie direkt zwischen Druckseitenwand 148 und Saugseitenwand 150 an Profilnase 144 und Profilhinterkante 146. Eine der Schweißnähte 170 ist in dem vergrößerten Ausschnitt in FIG 2 detaillierter gezeigt.

## Patentansprüche

1. Turbinenschaufel (120, 130) für eine Gasturbine (100) mit einem Befestigungsbereich (160) und einem sich daran anschließenden Plattformbereich (158), der eine Plattform (162) umfasst, an der ein im Querschnitt profiliertes Schaufelblatt mit einer Druckseitenwand (148) und einer Saugseitenwand (150) angeordnet ist,
wobei die Turbinenschaufel (120, 130) aus zwei miteinander verbundenen Teilen besteht,
wobei der erste Teil die Druckseitenwand (148) und der zweite Teil die Saugseitenwand (150) umfasst.

2. Turbinenschaufel (120, 130) nach Anspruch 1,
bei der zwischen Druckseitenwand (148) und Saugseitenwand (150) zumindest eine diese verbindende Rippe (154) angeordnet ist und der zweite Teil die Rippe (154) umfasst.

3. Turbinenschaufel (120, 130) nach einem der vorhergehenden Ansprüche,
bei der der zweite Teil den Plattformbereich (158) umfasst.

4. Turbinenschaufel (120, 130) nach einem der vorhergehenden Ansprüche,
bei der der zweite Teil den Befestigungsbereich umfasst.

5. Turbinenschaufel (120, 130) nach einem der vorhergehenden Ansprüche,
bei der der erste und der zweite Teil formschlüssig verbunden sind.

6. Turbinenschaufel (120, 130) nach Anspruch 5,
bei der der erste und der zweite Teil über eine Nut-Feder-Verbindung (166, 168) verbunden sind.

7. Turbinenschaufel (120, 130) nach Anspruch 3 und 6,
bei der die Nut (168) in den Plattformbereich (158) eingebracht ist und die Feder (166) an der dem Plattformbereich (158) zugewandten Seite der Druckseitenwand (148) angeordnet ist.

8. Turbinenschaufel (120, 130) nach Anspruch 7,
bei der Nut (168) und Feder (166) im Querschnitt L-förmig ausgebildet sind.

9. Turbinenschaufel (120, 130) nach einem der vorhergehenden Ansprüche,
bei der der erste und der zweite Teil stoffschlüssig verbunden sind.

10. Turbinenschaufel (120, 130) nach Anspruch 9,
bei der der erste und der zweite Teil über eine Schweißverbindung, insbesondere eine Elektronenstrahlschweißverbindung verbunden sind.

11. Verfahren zur Herstellung einer Turbinenschaufel (120, 130), umfassend die Verfahrensschritte:
- Gießen eines ersten Teils mit einer Druckseitenwand (148),
- Gießen eines zweiten Teils mit einer Saugseitenwand (150),
- Verbinden des ersten und des zweiten Teils.

12. Verfahren nach Anspruch 11,
bei dem der zweite Teil eine die Druckseitenwand (148) und Saugseitenwand (150) verbindende Rippe (154) und/oder einen Plattformbereich (158) umfasst.

13. Verfahren nach Anspruch 11 oder 12,
bei dem das Verbinden mittels Formschluss und/oder mittels Stoffschluss erfolgt.

14. Verfahren nach Anspruch 13,
bei dem das Verbinden mittels Schweißen, insbesondere Elektronenstrahlschweißen erfolgt.

15. Stator (143) oder Rotor (103) für eine Gasturbine (100), umfassend eine Turbinenschaufel (120, 130) nach einem der Ansprüche 1 bis 10 und/oder eine Turbinenschaufel (120, 130), hergestellt mit dem Verfahren nach einem der Ansprüche 11 bis 14,
wobei die Turbinenschaufel (120, 130) insbesondere eine Laufschaufel (120) ist.
